# EUROPEAN PATENT SPECIFICATION

(11) **EP 4 536 591 B1**
(45) Date of publication and mention of the grant of the patent: **29.04.2026**
(21) Application number: 23732056.9
(22) Date of filing: 09.06.2023
(51) Int. Cl.: C01F 5/40, C05D 5/00, C05D 9/02

(54) **PROCESS FOR PREPARING MAGNESIUM SULPHATE**
VERFAHREN ZUR HERSTELLUNG VON MAGNESIUMSULFAT
PROCÉDÉ DE PRÉPARATION DE SULFATE DE MAGNÉSIUM

(30) Priority: 10.06.2022 IT 202200012374
(43) Date of publication of application: 16.04.2025
(73) Proprietor: amaTEQ Holding GmbH, 48143 Münster (DE)
(72) Inventor: KEHRMANN, Alexander, 48143 Münster (DE)
(74) Representative: Hoffmann Eitle
(86) International application number: PCT/EP2023/065482
(87) International publication number: WO 2023/237737

(56) References cited:
- CN-A- 107 963 644
- US-A1- 2014 245 804

## Description

### Technical Field of the Invention

The present invention relates to a process for preparing a magnesium sulphate.

### Background art

Titanium dioxide (TiO₂) occurs in nature as a mineral and is mainly obtained from ilmenite ore.

One of the most used TiO₂ production process is the so-called sulphate process. In this process the ilmenite mineral is dissolved in sulphuric acid to extract iron (II) sulphate hydrates and to form a mixture of sulphates the most important of which is titanyl sulphate (TiOSO₄). A part of the iron is in a next step removed as iron (II) sulphate heptahydrate from the liquid reaction mixture by cooling crystallisation. The titanyl sulphate is then hydrolysed in solution to give insoluble, hydrated titanium dioxide. This solid product is then heated in a calciner to evaporate the hydration water in the final solid product that is pure titanium dioxide.

The sulphate process is technologically quite simple and allows to obtain rutile crystals of TiO₂ and anatase crystals of TiO₂. Anatase is characterized by softer crystals compared to rutile crystals and are preferred for an application as catalysts or for a small number of specialist applications (e.g. in the production of self-cleaning glass).

However, a drawback of the sulphate process is that it produces large amounts of waste materials, in particular of diluted sulphuric acid. Consequently, the sulphate process for the production of titanium dioxide involves expensive pollution control processes necessary for managing the production wastes, by preconcentrating or neutralising of diluted sulphuric acid.

Documents CN107963644A, CN104118893A, and US2014245804A1 for example, disclose processes for preparing magnesium sulphate using sulphuric acid deriving from the production process of TiO₂

### Technical problem

It would be therefore desirable to have a process that can make use of weak acid waste of the titanium dioxide production, so as to make the sulphate synthetic route of TiO₂ more profitable from an environmental and economic standpoint.

### Summary of the Invention

The Applicant has developed a process for preparing a magnesium sulphate using the sulphuric acid deriving from the production process of TiO₂. Surprisingly, this process results in a magnesium sulphate having the features as defined in the present contest, and that can be advantageously used as a fertilizer. Moreover, it has been found that the process according to the invention allows to obtain magnesium sulphate exclusively using the sulphuric acid deriving from the production process of TiO₂ that is a diluted sulphuric acid having a concentration of from 10%wt to 40%wt.

### Brief description of the Figures

- **Figure 1** is a schematic view of the process of the present invention, according to a possible embodiment, wherein the reference signs are as follows: 1 = calcined magnesite; 2 = diluted sulphuric acid originated from a TiO₂ production process; 3 = gases; 4 = reaction product; 5 = final product in powder form; 6 = scrubbing solvent; 7 = scrubbing purge; A = step of reacting; B = Spray-Drying step C = step of scrubbing.
- **Figure 2** shows diagrams of dynamic laser diffraction particle size analysis of calcined magnesite of two types (named "M1" and "M2"). Volume distribution of the particle size.
- **Figure 3****:** Diagram showing the monohydrate content in the MgSO₄ after spray-drying vs air outlet temperature.

### Detailed description of the invention

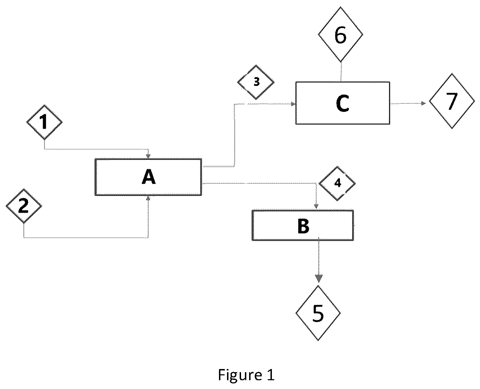

Subject of the present invention is a process for preparing a magnesium sulphate comprising a step of reacting a calcined magnesite comprising magnesium oxide (MgO) with sulphuric acid (H₂SO₄) having a concentration of from 10% to 40% thereby obtaining said magnesium sulphate (MgSO₄) and water (H₂O). The step of reacting is shown as step "A" in figure 1.

In the present description the expression "calcined" means a magnesite material subjected to a calcination process before the step of reacting with H₂SO₄. This calcination process is performed on a natural magnesite ore for increasing an amount of magnesium oxide (MgO) in the calcined magnesite with respect to the naturally occurring magnesite.

The step of reacting is preferably performed by mixing the raw materials - calcined magnesite comprising MgO and H₂SO₄ - in a reaction container (e.g. in a continuously stirred reaction container) to give a reaction mixture. Preferably, the step of reacting is performed at the storage temperature of the raw materials (e.g. comprised from 5°C to 30°C, preferably comprised from 15°C to 25°C) and at atmospheric pressure (1 atm) or at a pressure below the atmospheric pressure (< 1 atm).

The reaction is spontaneous. Therefore, the reaction time is not particularly long or limited. In particular, no extended reaction time is normally necessary. The step of reacting is exothermic. Preferably, depending from the feeding rates of the raw materials, it is possible to perform a temperature control of the reaction mixture, for example for avoiding that the reaction mixture exceeds a threshold temperature (e.g. 90°C, 100°C or 110°C). The pH of the reaction mixture is an acidic pH, preferably the reaction mixture has a pH comprised from pH 1.5 and pH 4, more preferably comprised from pH 2 and 3.

Since the reaction is exothermic and can involve the formation of foam, the reactor can be provided with a cyclone for containing the foam and re-sending it into the reactor itself. The vents of each cyclone can be sent to a scrubber to be treated.

Preferably, an anti-foam agent can be added into the reaction mixture. The choice of anti-foam agent is not particularly limited as long as is an anti-foam agent suitable for use in agricultural products, (e.g. fertilizers). Moreover, the anti-foam agent has to be compatible with the acidic pH of the reaction mixture, e.g. pH 2-3.

For example, the following commercial anti-foaming agents can be used and are particularly advantageous: Quell 516, DF 4508, Silcolapse easy 10, Silcolapse clear 30, Silcolapse 50-20, or mixtures thereof.

The anti-foaming agent can be added in a solid form or in a liquid form. When added in a liquid form, this is added in an amount that does not significantly varies the concentration of the H₂SO₄ in the sulphuric acid in the reaction mixture, i.e. the concentration of H₂SO₄ is comprised from 10%wt to 40%wt, preferably comprised from 15%wt to 35%wt, more preferably comprised from 21%wt to 30%wt, (e.g. 22%wt, 23 wt%).

In the step of reacting the calcined magnesite is fed in the form of a powder, and the sulphuric acid is fed as an aqueous liquid solution. The sulphuric acid derives from the production process of TiO₂.

A ratio ("RMgA") between the moles of magnesium and the moles of sulphuric acid in the step of reacting is preferably comprised from 0.9 to 1.3, more preferably comprised from 0.92 to 1.2, even more preferably comprised from 0.95 to 1.1, most preferably comprised from 0.97 to 1.03.

For producing a 100 % water soluble MgSO₄ a small excess of acid can be advantageous.

Said calcined magnesite comprises, in addition to magnesium oxide, also other salts such as calcium oxide (CaO), optionally silicon dioxide (SiO₂), optionally iron oxide (Fe₂O₃) and/or optionally calcium and magnesium carbonate (CaMg(CO₃)₂).

Depending on the composition of the calcined magnesite used in the process, the chemical reactions could lead to reaction products other than magnesium sulphate (MgSO₄) and water (H₂O) only.

More precisely, the chemical reactions mainly involved in the process of the present invention are the following:

(I) H₂SO₄ + MgO → MgSO₄+H₂O

(II) 2 H₂SO₄ + CaMg(CO₃)₂ → MgSO₄+ CaSO₄ + 2 CO₂ + H₂O

(III) H₂SO₄ + CaO → CaSO₄·2H₂O + H₂O

Reaction (I) and (II) are both useful for obtaining magnesium sulphates. However, reaction (III) subtracts sulphuric acid from reacting in (I) and (II) and gives water and calcium sulphate di-hydrate (CaSO₄.2H₂O) as a by-product.

Also, reaction (II) develops carbon dioxide (CO₂). If carbon dioxide is developed during the step of reacting, the present process preferably comprises - during and/or after the step of reacting - a step of scrubbing said CO₂, preferably a step of scrubbing a gas flow containing said carbon dioxide with a solvent, more preferably with water or with an aqueous solution. Preferably, said gas flow is obtained by performing the step of reacting at a pressure below the atmospheric pressure (< 1 atm), e.g. by using suction means such as a fan.

The step of scrubbing is shown as step "C" in figure 1.

The purpose of the step of scrubbing is also and mainly to remove dangerous gases from the off-gas stream. For example, H₂S or Sox (e.g. SO₂) can be formed by e.g. sulfidic impurities of the MgO, HCl or HF can be formed by impurities with small amounts of halides (Cl, F). The step of scrubbing gives a liquid scrubbing purge containing the scrubbed gases.

The step of scrubbing could be performed in a scrubber device positioned fluidically downstream to the step of reacting. The term "fluidically downstream" refers to the stream direction of said gas flow. Preferably, the suction means are fluidically connected to the reaction container (e.g. to the continuously stirred reaction container) so as to move said gases from said reaction container to the scrubber device.

Preferably, the step of scrubbing is performed with the scrubbing solvent (preferably water or aqueous solution) at a temperature comprised from 10°C to 30°C, preferably comprised from 22°C to 28°C, more preferably comprised from 24°C to 26°C, at atmospheric pressure (1 atm).

The calcined magnesite used in the present process comprises (percentages by weight (%wt) expressed with respect to the overall weight of said magnesite):
- magnesium oxide (MgO) from 50%wt to 98%wt;
- calcium oxide (CaO) from 0,1%wt to 35%wt;
- optionally silicon dioxide (SiO₂), iron oxide (Fe₂O₃) and/or calcium and magnesium carbonate (CaMg(CO₃)₂), each independently in an amount from 0.5%wt to 15%wt. Preferably, said calcined magnesite comprises:
- magnesium oxide (MgO) from 53%wt to 90%wt, more preferably from 55%wt to 70%wt, even more preferably from 60%wt to 65%wt;
- calcium oxide (CaO) from 0.5%wt to 20%wt, more preferably from 0.9%wt to 15%wt, even more preferably from 5.0%wt to 10%wt;
- optionally silicon dioxide (SiO₂), iron oxide (Fe₂O₃) and/or calcium and magnesium carbonate (CaMg(CO₃)₂), each independently in an amount from 0.6%wt to 12%wt, more preferably from 1.0%wt to 10%wt, even more preferably from 1.5%wt to 7%wt.

Said calcined magnesite is in the form of a powder. Said powder preferably comprises powder particles having a particle size distribution d90 = 85 µm.

In the present description the expression "d90" (or its equivalent "Dv(90)") means a point in the size distribution, up to and including which, 90% of the total volume of powder particles in the sample is contained. More precisely, "d90 = 85 µm" means that 90% of the total volume of powder particles in the sample has a size of 85 µm or smaller. Similar definitions apply also for "d50" or "Dv(50)" and "d10" or "Dv(10)" that refer to points in the size distribution below which 50% and 10%, respectively, of the total volume of powder particles is contained.

The particle size distribution (d90, d50 and/or d10) in the present invention is preferably determined by a dynamic laser diffraction particle size analysis. (Dynamic light scattering). A commonly known dynamic light scattering instrument and setting can be used.

Preferably, said powder of calcined magnesite consists of powder particles having a particle size distribution d90 = 85 µm.

More preferably, said powder comprises or, alternatively, consists of powder particles having a particle size distribution d90 = 85 µm, d50 = 33 µm, d10 = 4.6 µm, more preferably a particle size distribution d90 = 78 µm, d50 = 25 µm, d10 = 4.3 µm; even more preferably a particle size distribution d90 = 70 µm, d50 = 22 µm, d10 = 4.0 µm.

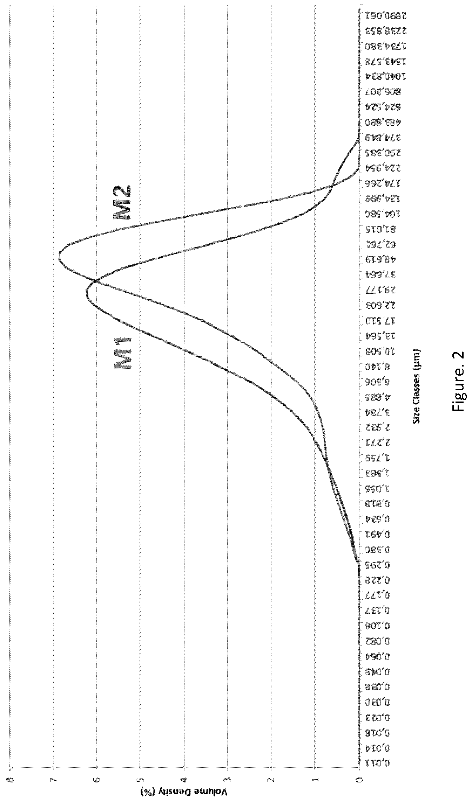

As an example, said powder comprises powder particles having a particle size distribution d90 = 69.1 µm, d50 = 21.6 µm, d10 = 3.96 µm, or a particle size distribution according to the curve M1 in figure 2.

The sulphuric acid used in the process according to the invention is a diluted sulphuric acid originated from a titanium dioxide (TiO₂) production process. In the present description this can also be referred to as "sulphuric acid" or "diluted sulphuric acid". All these terms are used when referring to H₂SO₄ in a concentration comprised from 10%wt to 40%wt, preferably comprised from 15%wt to 35%wt, more preferably comprised from 21%wt to 30%wt, (e.g. 22%wt, 23 wt%).

Since the reaction step is performed adding solid MgO to the sulphuric acid solution, the concentration of sulphuric acid remains comprised from 10%wt to 40%wt, preferably from 15%wt to 35%wt, more preferably comprised from 21%wt to 30%wt.

The diluted sulphuric acid originated from the titanium dioxide (TiO₂) production process may be pre-mixed with the raw materials magnesite. Alternatively, the diluted sulphuric acid may be fed independently to the reaction container (e.g. to the continuously stirred reaction container) to give the reaction mixture.

In the present description the expression "originated from a titanium dioxide (TiO₂) production process" means a hydrolysed solution of titanyl sulphate (TiOSO₄) from which an insoluble, hydrated titanium dioxide has been separated. In other terms, the diluted sulphuric acid originated from the titanium dioxide production process is a filtered solution of ferrous sulfate and sulphuric acid after the optional, partly removal of ferrous sulfate by cooling crystallisation and the removal of titanyl sulfate by hydrolysis.

The "production process" referred to in such expression is therefore implicitly a sulphate process for the production of titanium dioxide.

The diluted sulphuric acid originated from the titanium dioxide (TiO₂) production process more preferably comprises sulphuric acid in an amount comprised from 15%wt to 35%wt, even more preferably comprised from 21%wt to 30%wt, ferrous sulphate (FeSO₄) in an amount comprised from 1%wt to 10%wt and ferric sulphate (Fe₂[SO₄]₃) in an amount comprised from 1%wt to 3%wt in aqueous solution.

Before being used in the process, said diluted sulphuric acid originated from the titanium dioxide production process is subjected to a step of separating at least in part one or more rare earth elements from said diluted sulphuric acid. Preferably said rare earth element(s) is/are selected from the group consisting of cerium, dysprosium, erbium, europium, gadolinium, holmium, lanthanum, lutetium, neodymium, praseodymium, promethium, samarium, scandium, terbium, thulium, ytterbium, yttrium and their mixtures, more preferably scandium and/or yttrium, even more preferably scandium.

In other words, the diluted sulphuric acid originated from the titanium dioxide production process (i.e. the filtered hydrolysed solution of titanyl sulphate) firstly undergoes a step of separating of at least one rare earth element, and then is used for the reaction step.

The step of separating at least in part one or more rare earth elements comprises an ion exchange separation or a solvent extraction.

Said ion exchange separation is preferably a selective ion exchange separation on a gel sulfonated polystyrene cation exchange resin at a pH value comprised from 1.0 to 3.0, preferably comprised from 1.5 to 2.0.

Preferably, said gel sulfonated polystyrene cation exchange resin is in the form of particles or spherical beads. More preferably, the mean particle size distribution of said particles or spherical beads is comprised from 100 µm to 1500 µm, preferably comprised from 300 µm to 1200 µm.

More preferably, said gel sulfonated polystyrene cation exchange resin is cross-linked with styrene divinyl benzene (DVB). These resins are known in the art with the tradename "Purolite C-100" (Purolite Corporation) in various percentages of DVB linkages.

An amount of said DVB is preferably at least equal to or higher than 8% by weight (%wt), preferably comprised from 8%wt to 20%wt, more preferably comprised from 8%wt to 16%wt, with respect to the overall weight of said gel sulfonated polystyrene cation exchange resin.

Preferably, said gel sulfonated polystyrene cation exchange resin cross-linked with styrene divinyl benzene (DVB), in NH₄⁺ or in Na⁺ form, is loaded into a vertical separation column, and said diluted sulphuric acid originated from the titanium dioxide production process is passed through said column from the bottom upward with a predefined flow-rate. For example, for a vertical column having 1 litre capacity, the predefined flowrate could be comprised from 2 litre/hour to 8 litre/hour, e.g. 5 litre/hour.

Said solvent extraction separation of said at least one rare earth element is preferably a separation step with an organic phase or extraction solvent, preferably 2-(ethylhexyl)phosphonic acid mono-2-ethylhexyl ester (HEH[EHP]) or with di-(2-ethylhexyl)phosphoric acid (HDEHP).

The general formulae of HEH[EHP] (CAS N. 14802-03-0) and of HDEHP (CAS N. 298-07-7) are the following:

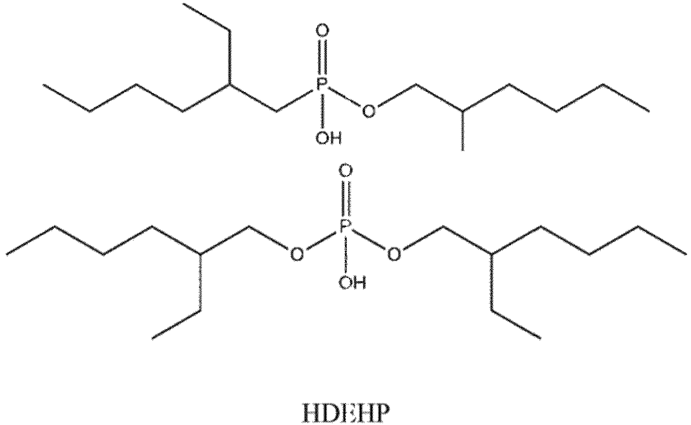

More preferably, said solvent extraction separation is a stepwise separation comprising at least a first separation step with HEH[EHP] as a first extraction solvent, and a subsequent second separation step performed on the aqueous phase obtained from the first separation step with HDEHP as a second extraction solvent. Consequently, according to this embodiment, the stepwise separation bases on the different extraction abilities and a cation-exchange mechanism of HEH[EHP] and of HDEHP with respect to the rare earth element(s).

Preferably, each separation step could comprise more than one stage (e.g. from 2 to 6 stages, preferably from 2 to 4 stages, e.g. 3 stages), whereby the aqueous phase is contacted with fresh extraction solvent in each stage.

A ratio V_{A}/V_{O} between the volume of the aqueous phase (V_{A}) and the volume of the organic phase (V_{O}) in the solvent extraction separation is preferably comprised from 5:1 to 25:1, more preferably comprised from 10:1 to 20:1.

For HEH[EHP], the ratio V_{A}/V_{O} in the solvent extraction separation is preferably comprised from 5:1 to 15:1, more preferably comprised from 8:1 to 12:1, e.g. of 10:1. For HDEHP, the ratio V_{A}/V_{O} in the solvent extraction separation is preferably comprised from 15:1 to 25:1, more preferably comprised from 17:1 to 23:1, e.g. of 20:1.

Preferably, HEH[EHP] and/or HDEHP (preferably both) are in a non-saponified form. In the present description the expression "non- saponified" means that these phosphoric esters are not hydrolysed under basic conditions to form an alcohol and the salt of their acid.

After the solvent extraction separation is concluded, the present process preferably comprises a step of stripping the organic phase or extraction solvent loaded with the rare earth element(s) with a solution of hydrochloric acid (HCl). Preferably, the step of stripping is performed in one or more stages (e.g. from 1 to 5 stages, preferably from 1 to 3 stages).

A ratio V_{A}/V_{O} between the volume of the aqueous phase (V_{A}) and the volume of the organic phase (V_{O}) in the step of stripping is preferably comprised from 20:1 to 1:25, more preferably comprised from 18:1 to 1:22.

For HEH[EHP], the ratio V_{A}/V_{O} in the step of stripping is preferably comprised from 20:1 to 10:1, more preferably comprised from 18:1 to 14:1, e.g. of 16:1.

For HDEHP, the ratio V_{A}/V_{O} in the step of stripping is preferably comprised from 1:15 to 1:25, more preferably comprised from 1:18 to 1:22, e.g. of 1:20.

In the process according to the invention, the moles of sulphuric acid are in a stoichiometric excess with respect to the moles of magnesium oxide. More precisely, said stoichiometric excess is based on the actual moles of magnesium oxide, of calcium oxide and of the optional calcium and magnesium carbonate in said calcined magnesite.

The actual moles of magnesium oxide, of calcium oxide and of the optional calcium and magnesium carbonate in said calcined magnesite are relevant for establishing to what extent the moles of sulphuric acid are used in reaction (I) and in optional reaction (II) - both leading to magnesium sulphate - and to what extent reaction (III) subtracts H₂SO₄ from the other desired reactions (I) and optionally (II) to obtain magnesium sulphate.

Preferably, the present process comprises a step of determining said actual moles of magnesium oxide, of calcium oxide and of the optional calcium and magnesium carbonate in said calcined magnesite before the step of reacting said calcined magnesite with sulphuric acid (H₂SO₄).

The present process preferably comprises a step of determining actual moles of unreacted magnesium oxide, of unreacted calcium oxide and/or of unreacted calcium and magnesium carbonate eventually contained in the magnesium sulphate obtained after the step of reacting or in the final product.

Even more preferably, said step(s) of determining - performed before the step of reacting said calcined magnesite with sulphuric acid (H₂SO₄), after the step of reacting and/or in the final product - is/are performed with a spectroscopic analysis. Preferably, the step(s) of determining are performed *in situ* on the magnesite raw material, on the reaction product and/or in the final product.

Said spectroscopic analysis can be an X-ray spectroscopic analysis, or preferably an ICP-OES analysis.

After the step of reacting, the present process preferably comprises a step of spray-drying the reaction product, the reaction product after the reaction step can be fed still hot to a spray dryer directly or after a preliminary evaporative concentration step. For spray drying a high temperature of appr. 100 °C might be particularly advantageous.

The spray drying process can be performed using a commercial spray-dryer commonly used in this technical field.

Before the spray-drying step the spray-dryer can be heated up to the steady state and fed with hot water to heat up the feeding tube and the nozzle. The temperature obtained is preferably of from 65°C to 90°C, e.g. 70°C. The reaction product is preferably maintained at a temperature of 80-90°C and fed to the spray-dryer.

Preferably, the nozzles of the spray-dryer have a diameter comprised from 1 mm to 3 mm, preferably comprised from 1.5 mm to 2.5 mm, for example 2 mm.

The air flowrate is not particularly limited. Preferably, an air flowrate comprised from 80 Nm³/h to 200 Nm³/h is used, more preferably comprised from 100 Nm³/h to 180 Nₘ³/ₕ, e.g. 140 Nm³/h.

The inlet air temperature is not particularly limited. Preferably, the air inlet temperature (°C) is comprised from 150 °C to 350 °C, more preferably is comprised from 200°C to 300 °C, e.g. 250 °C, 275 °C.

The air outlet temperature (°C) is not particularly limited. Preferably, the air outlet temperature (°C) is comprised from 90 °C to 180 °C, preferably is comprised from 100 °C to 160 °C, e.g. 113 °C, 138 °C, 144 °C, 152 °C,

The liquid flowrate (I/h) is not particularly limited. Preferably, the liquid flowrate (I/h) is comprised from 4 I/h to 0.4 I/h, more preferably comprised from 2 I/h to 0.5 I/h.

Preferably, the final product, obtained with the process according to the invention, is in powder form and has powder particles with a mean particle size distribution below 500 µm, preferably below 250 µm, more preferably below 100 µm, even more preferably below 50 µm.

Preferably, the final product in powder form has powder particles with a particle size distribution d90 = 45 µm, d50 = 25 µm, preferably d90 = 40 µm, d50 = 20 µm, more preferably d90 = 35 µm, d50 = 15 µm.

One aspect of the present disclosure relates to a magnesium sulphate obtainable by the process according to the present invention.

The magnesium sulphate obtainable by the process of the present invention is particularly suitable for being used as a fertilizer.

Preferably, the present magnesium sulphate is particularly suitable as a fertilizer in oil palm plantations. Some non-limiting examples of the present invention will be reported below.

### EXPERIMENTAL PART

The purpose of the following tests is to determine a satisfactory recipe for the production of MgSO₄ starting from the diluted sulphuric acid and calcined magnesite described in the present disclosure.

For this determination, parameters such as soluble MgO, acid concentration and product manageability have been considered.

### Examples

Diluted sulfuric acid (23%wt), and calcinated magnesite are added to a plastic reactor having a volume of 50 I, stirred at 200 rpm, and allowed to react for 10 minutes. The amount of strong effluent and magnesite used in the Examples are as reported below. The reaction product is fed still hot to a spray dryer. Tests are carried out on a lab-scale spray dryer in order to analyse the product obtained with different operating conditions. A 2 mm nozzle is used for the tests.

The spray-dryer is heated up to the steady state and fed with hot water for 10 min to heat up the feeding tube and the nozzle. The reaction product, maintained at a temperature of 80-90°C, is fed to the spray-dryer; around 150-200 ml of solution is used for each test. Hot water is fed to the nozzle for 5 min for cleaning, and then the spray-dryer is cooled down and the samples (both from the bottom of the chamber and from the cyclone) are taken and analysed (determining the total water content gravimetrically at 300°C).

The different spray-drying conditions tested (tests 1-5) are as reported in Table 1. The magnesium sulphate obtained is a fine powder that can be efficiently separated from the cyclone. The samples obtained are weighted and analysed.

**Table 1**

| **Test. no** | **1** | **2** | **3** | **4** | **5** |
|---|---|---|---|---|---|
| Air flowrate (Nm³/h) | 140 | 140 | 140 | 140 | 140 |
| Liquid flowrate (L/h) | 1.62 | 1.62 | 0.81 | 0.81 | 0.54 |
| Air inlet | 250 | 250 | 250 | 275 | 275 |
| temperature (°C) | | | | | |
| Air outlet temperature (°C) | 113 | 113 | 138 | 144 | 152 |
| Total water (cyclone sample) (% wt.) | 26.0 | 25.7 | 24.9 | 24.0 | 17.0 |
| Total water (chamber sample) (% wt.) | 28.0 | 26.7 | 26.3 | 23.0 | 20.4 |

As shown in Table 1, the total water content of the samples is, for all the samples, higher than 13%, which is the theoretic crystal water content of magnesium sulphate monohydrate, and for all samples this amount is much lower than 51%, which is the theoretic crystal water content of the heptahydrate. The product obtained is composed by a mixture of different hydration forms (MgSO₄ x nH₂O.).

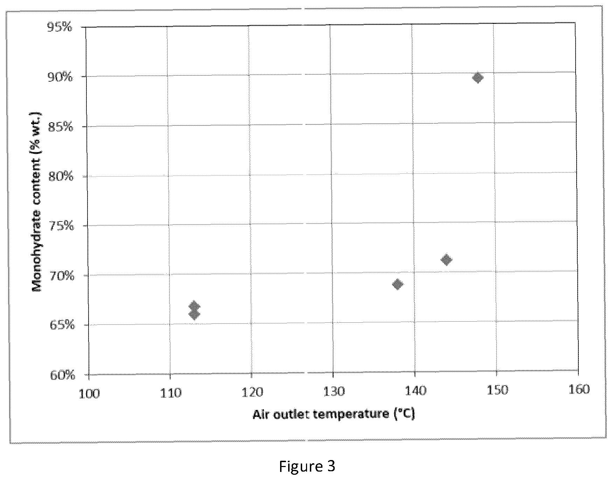

By mass balance on water, the monohydrate content can be easily calculated; the results are shown in Figure 3 as a function of the air outlet temperature. It is worth noting that the crystallization water content sharply decreases when the air outlet temperature overcome 150°C, which is heptahydrate decomposition temperature. For test 5, for instance, the product turns out to be composed by monohydrate for about 90%, if the rest is considered to be eptahydrate. By further increasing the air outlet temperature or the residence time a monohydrate content over 99% can be obtained.

### CONCLUSIONS

In view of the above, satisfactory conditions for the preparation of magnesium sulphate are the following:
- an acid concentration (%) of the mixture of sulphuric acids comprised from 10%wt to 40%wt;
- stoichiometric excess of H₂SO₄ based on the actual moles of magnesium oxide, of calcium oxide and of the optional calcium and magnesium carbonate, because carbonates influence the reaction stoichiometry of reaction (I) and (II) and CaO - that reacts according to reaction (III) - takes away sulphuric acid faster than desired reactions (I) and (II) that produce magnesium sulphate;

The products so obtained are particularly suitable for use in fertilizer products.

## Claims

1. A process for preparing a magnesium sulphate (MgSO₄) comprising the step of:
- reacting a sulphuric acid solution having a concentration of sulphuric acid comprised from 10%wt to 40%wt with a calcined magnesite comprising magnesium oxide (MgO) to obtain magnesium sulphate and water (H₂O);
wherein said calcined magnesite comprises in percentages by weight (%wt) expressed with respect to the overall weight of said magnesite:
- magnesium oxide (MgO) from 50%wt to 98%wt;
- calcium oxide (CaO) from 0,1%wt to 35%wt;
wherein the moles of said sulphuric acid are in a stoichiometric excess with respect to the moles of magnesium oxide, and
wherein the sulphuric acid is obtained from a titanium dioxide (TiO₂) production process and is subjected to a step of separating at least in part one or more rare earth elements, said step of separating comprising an ion exchange separation or a solvent extraction;
said at least one rare earth element being preferably scandium, yttrium or their mixtures, more preferably scandium, and said sulphuric acid obtained from a titanium dioxide (TiO₂) production process being a filtered hydrolysed solution of titanyl sulphate.

2. The process according to claim 1, wherein the calcined magnesite further comprises in percentages by weight (%wt) expressed with respect to the overall weight of said magnesite:
silicon dioxide (SiO₂), iron oxide (Fe₂O₃) and/or calcium and magnesium carbonate (CaMg(CO₃)₂), each independently in an amount from 0.5%wt to 15%wt; and wherein the stoichiometric excess is based on the moles of magnesium oxide, of calcium oxide and of the calcium and magnesium carbonate in said calcined magnesite, and on the following chemical reactions (I), (II) and (III):
(I) H₂SO₄ + MgO → MgSO₄+ H₂O
(II) 2 H₂SO₄ + CaMg(CO₃)₂ → MgSO₄+ CaSO₄ + 2 CO₂ + H₂O
(III) H₂SO₄ + CaO → CaSO₄·2H₂O + H₂O.

3. The process according to claim 1, wherein said calcined magnesite comprises in percentages by weight (%wt) expressed with respect to the overall weight of said magnesite:
- magnesium oxide (MgO) from 53%wt to 90%wt, preferably from 55%wt to 70%wt, more preferably from 60%wt to 65%wt;
- calcium oxide (CaO) from 0.5%wt to 20%wt, preferably from 0.9%wt to 15%wt, more preferably from 5.0%wt to 10%wt;
- optionally silicon dioxide (SiO₂), iron oxide (Fe₂O₃) and/or calcium and magnesium carbonate (CaMg(CO₃)₂), each independently in an amount from 0.6%wt to 12%wt, preferably from 1.0%wt to 10%wt, more preferably from 1.5%wt to 7%wt.

4. The process according to any of the preceding claims, wherein said calcinated magnesite is a powder comprising powder particles having a particle size distribution d90 = 85 µm, d50 = 33 µm, d10 = 4,6 µm; preferably a particle size distribution d90 = 78 µm, d50 = 25 µm, d10 = 4.3 µm.

5. The process according to any of claims 1 to 4, wherein said ion exchange separation is a selective ion exchange separation on a gel sulfonated polystyrene cation exchange resin at a pH value comprised from 1.0 to 3.0, preferably comprised from 1.5 to 2.0, wherein said sulfonated polystyrene cation exchange resin is cross-linked with styrene divinyl benzene (DVB), and wherein an amount of said DVB is at least equal to or higher than 8% by weight (%wt) with respect to the overall weight of said sulfonated polystyrene cation exchange resin.

6. The process according to any of claims 1 to 4, wherein said solvent extraction is a stepwise separation comprising a first separation step with 2-(ethylhexyl)phosphonic acid mono-2-ethylhexyl ester (HEH[EHP]) as a first extraction solvent, and a subsequent second separation step with di-(2-ethylhexyl)phosphoric acid (HDEHP) as a second extraction solvent.

7. The process according to any of the preceding claims, comprising a step of determining said actual moles of magnesium oxide, of calcium oxide and of the optional calcium and magnesium carbonate in said calcined magnesite before the step of reacting said calcined magnesite with the sulphuric acid solution (H₂SO₄);
and optionally a step of determining actual moles of unreacted magnesium oxide, of unreacted calcium oxide and/or of unreacted calcium and magnesium carbonate eventually contained in the magnesium sulphate obtained after the step of reacting; wherein said step(s) of determining is/are performed with a spectroscopic analysis.

## Patentansprüche

1. Verfahren zur Herstellung von Magnesiumsulfat (MgSO₄), umfassend die Schritte:
- das Umsetzen einer Schwefelsäurelösung, die eine Schwefelsäurekonzentration von 10 Gew.-% bis 40 Gew.-% aufweist, mit einem calcinierten Magnesit, umfassend Magnesiumoxid (MgO), um Magnesiumsulfat und Wasser (H₂O) zu erhalten;
wobei der calcinierte Magnesit, ausgedrückt in Gewichtsprozent (Gew.-%), bezogen auf das Gesamtgewicht des Magnesits, umfasst:
- Magnesiumoxid (MgO) zu 50 Gew.-% bis 98 Gew.-%;
- Calciumoxid (CaO) zu 0,1 Gew.-% bis 35 Gew.-%;
wobei die Mole an Schwefelsäure in einem stöchiometrischen Überschuss, bezogen auf die Mole an Magnesiumoxid, vorliegen, und
wobei die Schwefelsäure aus einem Titandioxid (TiO₂)-Herstellungsprozess erhalten wird und einem Schritt unterzogen wird, bei dem mindestens ein Teil eines oder mehrerer Seltenerdelemente abgetrennt wird, wobei der der Schritt des Abtrennens eine Ionenaustausch-Trennung oder eine Lösungsmittelextraktion umfasst;
das mindestens eine Seltenerdelement bevorzugt Scandium, Yttrium oder Mischungen davon, mehr bevorzugt Scandium, ist und die aus einem Titandioxid (TiO₂)-Herstellungsprozess erhaltene Schwefelsäure eine gefilterte hydrolysierte Lösung von Titanylsulfat ist.

2. Verfahren gemäß Anspruch 1, wobei der calcinierte Magnesit ferner, ausgedrückt in Gewichtsprozent (Gew.-%), bezogen auf das Gesamtgewicht des Magnesits, umfasst:
Siliciumdioxid (SiO₂), Eisenoxid (Fe₂O₃) und/oder Calcium- und Magnesiumcarbonat (CaMg(CO₃)₂), jeweils unabhängig voneinander in einer Menge von 0,5 Gew.-% bis 15 Gew.-%; und wobei der stöchiometrische Überschuss auf den Molen an Magnesiumoxid, Calciumoxid und Calcium- und Magnesiumcarbonat in dem calcinierten Magnesit und auf den folgenden chemischen Reaktionen (I), (II) und (III) basiert:
(I) H₂SO₄ + MgO → MgSO₄ + H₂O
(II) 2 H₂SO₄ + CaMg(CO₃)₂ → MgSO₄ + CaSO₄ + 2 CO₂ + H₂O
(III) H₂SO₄ + CaO → CaSO₄ · 2H₂O + H₂O.

3. Verfahren gemäß Anspruch 1, wobei der calcinierte Magnesit, ausgedrückt in Gewichtsprozent (Gew.-%), bezogen auf das Gesamtgewicht des Magnesits, umfasst:
- Magnesiumoxid (MgO) zu 53 Gew.-% bis 90 Gew.-%, bevorzugt zu 55 Gew.-% bis 70 Gew.-%, mehr bevorzugt zu 60 Gew.-% bis 65 Gew.-%;
- Calciumoxid (CaO) zu 0,5 Gew.-% bis 20 Gew.-%, bevorzugt zu 0,9 Gew.-% bis 15 Gew.-%, mehr bevorzugt zu 5,0 Gew.-% bis 10 Gew.-%;
- optional Siliciumdioxid (SiO₂), Eisenoxid (Fe₂O₃) und/oder Calcium- und Magnesiumcarbonat (CaMg(CO₃)₂), jeweils unabhängig voneinander in einer Menge von 0,6 Gew.-% bis 12 Gew.-%, bevorzugt von 1,0 Gew.-% bis 10 Gew.-%, mehr bevorzugt von 1,5 Gew.-% bis 7 Gew.-%.

4. Verfahren gemäß einem der vorstehenden Ansprüche, wobei der calcinierte Magnesit ein Pulver ist, das Pulverpartikel mit einer Partikelgrößenverteilung d90 = 85 µm, d50 = 33 µm, d10 = 4,6 µm; bevorzugt mit einer Partikelgrößenverteilung d90 = 78 µm, d50 = 25 µm, d10 = 4,3 µm, umfasst.

5. Verfahren gemäß einem der Ansprüche 1 bis 4, wobei die Ionenaustausch-Trennung eine selektive Ionenaustausch-Trennung an einem sulfonierten Polystyrol-Kationenaustauschharz-Gel bei einem pH-Wert von 1,0 bis 3,0, bevorzugt von 1,5 bis 2,0, ist, wobei das sulfonierte Polystyrol-Kationenaustauschharz mit Styrol-Divinylbenzol (DVB) vernetzt ist, und wobei eine Menge an DVB mindestens gleich oder mehr als 8 Gewichtsprozent (Gew.-), bezogen auf das Gesamtgewicht des sulfonierten Polystyrol-Kationenaustauschharzes, beträgt.

6. Verfahren gemäß einem der Ansprüche 1 bis 4, wobei die Lösungsmittelextraktion eine schrittweise Trennung ist, die einen ersten Trennschritt mit 2-(Ethylhexyl)phosphonsäuremono-2-ethylhexylester (HEH[EHP]) als erstem Extraktionslösungsmittel und einen anschließenden zweiten Trennschritt mit Di-(2-ethylhexyl)phosphorsäure (HDEHP) als zweitem Extraktionslösungsmittel umfasst.

7. Verfahren gemäß einem der vorstehenden Ansprüche, umfassend einen Schritt des Bestimmens der tatsächlichen Mole an Magnesiumoxid, Calciumoxid und optional Calcium- und Magnesiumcarbonat in dem calcinierten Magnesit vor dem Schritt des Umsetzens des calcinierten Magnesits mit der Schwefelsäurelösung (H₂SO₄);
und optional einen Schritt des Bestimmens der tatsächlichen Mole an unreagiertem Magnesiumoxid, unreagiertem Calciumoxid und/oder unreagiertem Calcium- und Magnesiumcarbonat, die schließlich in dem nach dem Reaktionsschritt erhaltenen Magnesiumsulfat enthalten sind; wobei der/die Bestimmungsschritt(e) mittels einer spektroskopischen Analyse durchgeführt wird/werden.

## Revendications

1. Procédé pour préparer un sulfate de magnésium (MgSO₄) comprenant l'étape de :
- mise en réaction d'une solution d'acide sulfurique présentant une concentration d'acide sulfurique comprise entre 10 % en poids et 40 % en poids avec une magnésite calcinée comprenant de l'oxyde de magnésium (MgO) pour obtenir du sulfate de magnésium et de l'eau (H₂O) ;
dans lequel ladite magnésite calcinée comprend en pourcentages en poids (% en poids) exprimés par rapport au poids total de ladite magnésite :
- oxyde de magnésium (MgO) de 50 % en poids à 98 % en poids ;
- oxyde de calcium (CaO) de 0,1 % en poids à 35 % en poids ;
dans lequel les moles dudit acide sulfurique sont en excès stœchiométrique par rapport aux moles d'oxyde de magnésium, et
dans lequel l'acide sulfurique est obtenu à partir d'un processus de production de dioxyde de titane (TiO₂) et est soumis à une étape de séparation d'au moins en partie un ou plusieurs éléments de terres rares, ladite étape de séparation comprenant une séparation par échange d'ions ou une extraction par solvant ;
ledit au moins un élément des terres rares étant préférablement le scandium, l'yttrium ou leurs mélanges, plus préférablement le scandium, et ledit acide sulfurique obtenu à partir d'un processus de production de dioxyde de titane (TiO₂) étant une solution hydrolysée filtrée de sulfate de titanyle.

2. Procédé selon la revendication 1, dans lequel la magnésite calcinée comprend en outre en pourcentages en poids (% en poids) exprimés par rapport au poids total de ladite magnésite :
dioxyde de silicium (SiO₂), oxyde de fer (Fe₂O₃) et/ou carbonate de calcium et de magnésium (CaMg(CO₃)₂), chacun indépendamment en une quantité de 0,5 % en poids à 15 % en poids ; et dans lequel l'excès stœchiométrique est basé sur les moles d'oxyde de magnésium, d'oxyde de calcium et du carbonate de calcium et de magnésium dans ladite magnésite calcinée, et sur les réactions chimiques suivantes (I), (II) et (III) :
(I) H₂SO₄ + MgO → MgSO₄+H₂O
(II) 2 H₂SO₄ + CaMg(CO₃)₂ → MgSO₄+ CaSO₄ + 2 CO₂ + H₂O
(III) H₂SO₄ + CaO → CaSO₄·2H₂O + H₂O.

3. Procédé selon la revendication 1, dans lequel ladite magnésite calcinée comprend en pourcentages en poids (% en poids) exprimés par rapport au poids total de ladite magnésite :
- oxyde de magnésium (MgO) de 53 % en poids à 90 % en poids, préférablement de 55 % en poids à 70 % en poids, plus préférablement de 60 % en poids à 65 % en poids ;
- oxyde de calcium (CaO) de 0,5 % en poids à 20 % en poids, préférablement de 0,9 % en poids à 15 % en poids, plus préférablement de 5,0 % en poids à 10 % en poids ;
- facultativement dioxyde de silicium (SiO₂), oxyde de fer (Fe₂O₃) et/ou carbonate de calcium et de magnésium (CaMg(CO₃)₂), chacun indépendamment en une quantité de 0,6 % en poids à 12 % en poids, préférablement de 1,0 % en poids à 10 % en poids, plus préférablement de 1,5 % en poids à 7 % en poids.

4. Procédé selon l'une quelconque des revendications précédentes, dans lequel ladite magnésite calcinée est une poudre comprenant des particules de poudre présentant une distribution granulométrique d90 = 85 µm, d50 = 33 µm, d10 = 4,6 µm ; préférablement une taille de particule d90 = 78 µm, d50 = 25 µm, d10 = 4,3 µm.

5. Procédé selon l'une quelconque des revendications 1 à 4, dans lequel ladite séparation par échange d'ions est une séparation par échange d'ions sélective sur une résine échangeuse de cations de polystyrène sulfonée en gel à une valeur de pH comprise entre 1,0 et 3,0, préférablement comprise entre 1,5 et 2,0, dans lequel ladite résine échangeuse de cations de polystyrène sulfonée est réticulée avec du styrène divinylbenzène (DVB), et dans lequel une quantité dudit DVB est au moins égale ou supérieure à 8 % en poids (% en poids) par rapport au poids total de ladite résine échangeuse de cations de polystyrène sulfonée.

6. Procédé selon l'une quelconque des revendications 1 à 4, dans lequel ladite extraction par solvant est une séparation par étapes comprenant une première étape de séparation avec de l'ester mono-2-éthylhexyl de l'acide 2-(éthylhexyl)phosphonique (HEH[EHP]) comme premier solvant d'extraction, et une deuxième étape de séparation ultérieure avec de l'acide di-(2-éthylhexyl)phosphorique (HDEHP) comme deuxième solvant d'extraction.

7. Procédé selon l'une quelconque des revendications précédentes, comprenant une étape de détermination desdites moles réelles d'oxyde de magnésium, d'oxyde de calcium et du carbonate de calcium et de magnésium facultatif dans ladite magnésite calcinée avant l'étape de mise en réaction de ladite magnésite calcinée avec la solution d'acide sulfurique (H₂SO₄) ; et
facultativement une étape de détermination des moles réelles d'oxyde de magnésium non réagi, d'oxyde de calcium non réagi et/ou de carbonate de calcium et de magnésium non réagi éventuellement contenus dans le sulfate de magnésium obtenu après l'étape de réaction ; dans lequel ladite ou lesdites étapes de détermination sont réalisées avec une analyse spectroscopique.
